(19) **Europäisches Patentamt**
**European Patent Office**
**Office européen des brevets**

(11) **EP 2 367 279 A1**

(12) **EUROPEAN PATENT APPLICATION**

(43) Date of publication:
**21.09.2011 Bulletin 2011/38**

(51) Int Cl.:
*H02P 21/05* (2006.01)   *H02P 27/08* (2006.01)

(21) Application number: **11158351.4**

(22) Date of filing: **15.03.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (71) Applicant: **OMRON Automotive Electronics Co., Ltd.**<br>**Komaki, Aichi 485-0802 (JP)** |
| (30) Priority: **15.03.2010 JP 2010057819** | (72) Inventor: **Yabuguchi, Michisada**<br>**Aichi Aichi 485-0802 (JP)** |
| | (74) Representative: **Brochard, Pascale et al**<br>**Osha Liang**<br>**32 avenue de l'Opéra**<br>**75002 Paris (FR)** |

(54) **Motor drive device**

(57)    The invention provides a motor drive device (100) capable of suppressing generation of torque ripple and abnormal noise even if a motor (150) rotates at high speed. The motor drive device (100) comprises an inverter (1), and a control section (2) for controlling the inverter (1). The control section (2) comprises a current command value calculation unit (21) for calculating a current command value, a rotation calculation unit (22) for calculating a rotation angle θ and an angular speed ω of the motor (150), a drive signal generation unit (24) for generating a PWM signal, a correction signal generation unit (25) for generating a correction signal for correcting the PWM signal to compensate for the dead time of the inverter, and an application current setting unit (27) for adding a dead time to the PWM signal corrected by the correction signal and outputting the resulting signal to the inverter (1). The correction signal generation unit (25) generates the correction signal based on the current command value and the rotation angle θ and the angular speed ω calculated by the rotation calculation unit (22).

*FIG. 1*

EP 2 367 279 A1

**Description**

BACKGROUND OF THE INVENTION

1. TECHNICAL FIELD

The present invention relates to a motor drive device including a drive circuit for driving a motor, and a control section for controlling the drive circuit.

2. RELATED ART

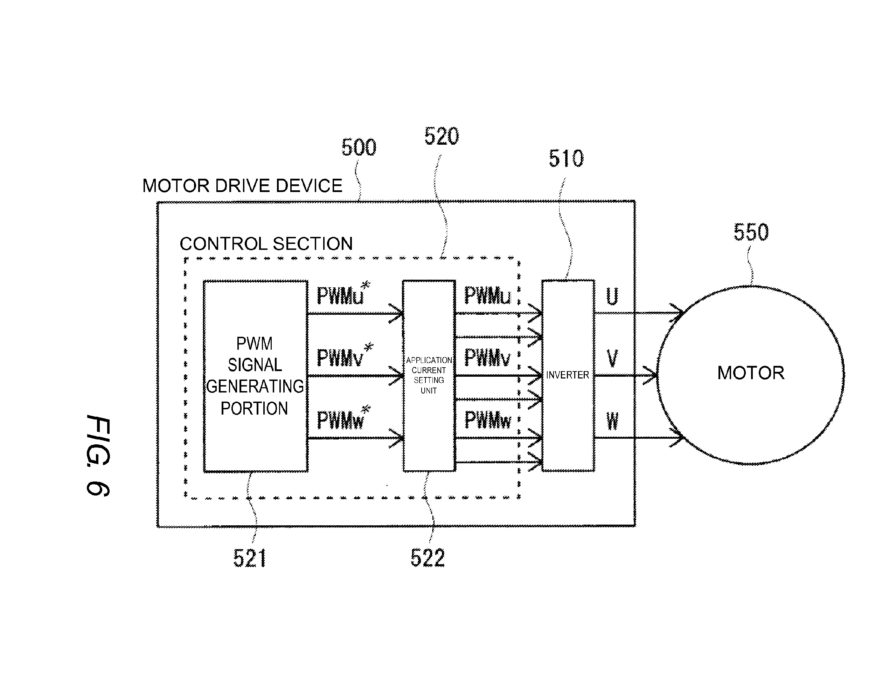

A motor drive device 500 including an inverter 510 for driving a motor 550, and a control section 520 for controlling the inverter 510, as shown in Fig. 6, is conventionally known. The motor 550 is, for example, a three-phase brushless motor.

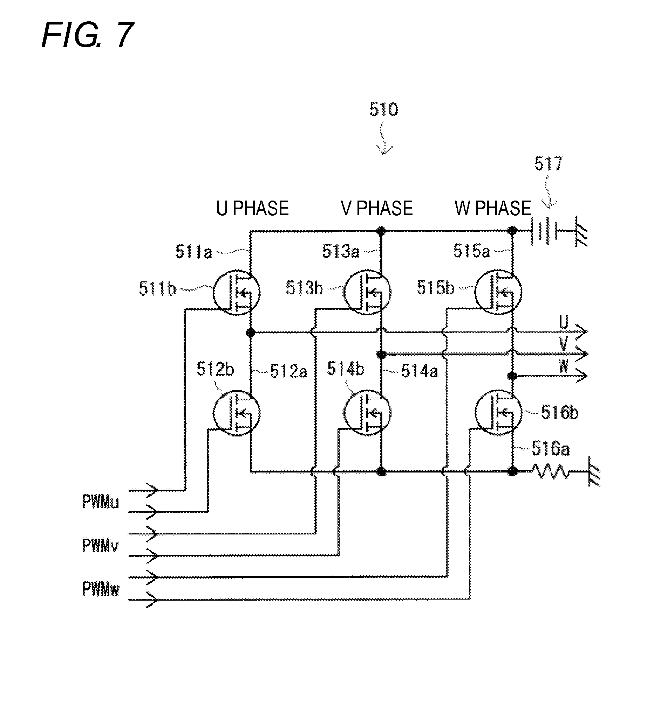

As shown in Fig. 7, the inverter 510 is configured by a three-phase bridge in which three sets of a pair of upper and lower arms are arranged in correspondence with a U phase, a V phase, and a W phase. An upper arm 511 a of the U phase includes a switching element 511 b, and a lower arm 512a of the U phase includes a switching element 512b. An upper arm 513a of the V phase includes a switching element 513b, and a lower arm 514a of the V phase includes a switching element 514b. An upper arm 515a of the W phase includes a switching element 515b, and a lower arm 516a of the W phase includes a switching element 516b. The switching elements 511 b to 516b are FET (Field Effect Transistors), and the like, and have the ON/OFF state controlled based on a PWM signal (PWMu, PWMv, PWMw) inputted from the control section 520.

As shown in Fig. 6, the control section 520 includes a PWM signal generation unit 521 for generating the PWM signal (PWMu*, PWMv*, PWMw*), and an application current setting unit 522 for adding a dead time to the PWM signal generated by the PWM signal generation unit 521 and outputting the PWM signal (PWMu, PWMv, PWMw) added with the dead time to the inverter 510.

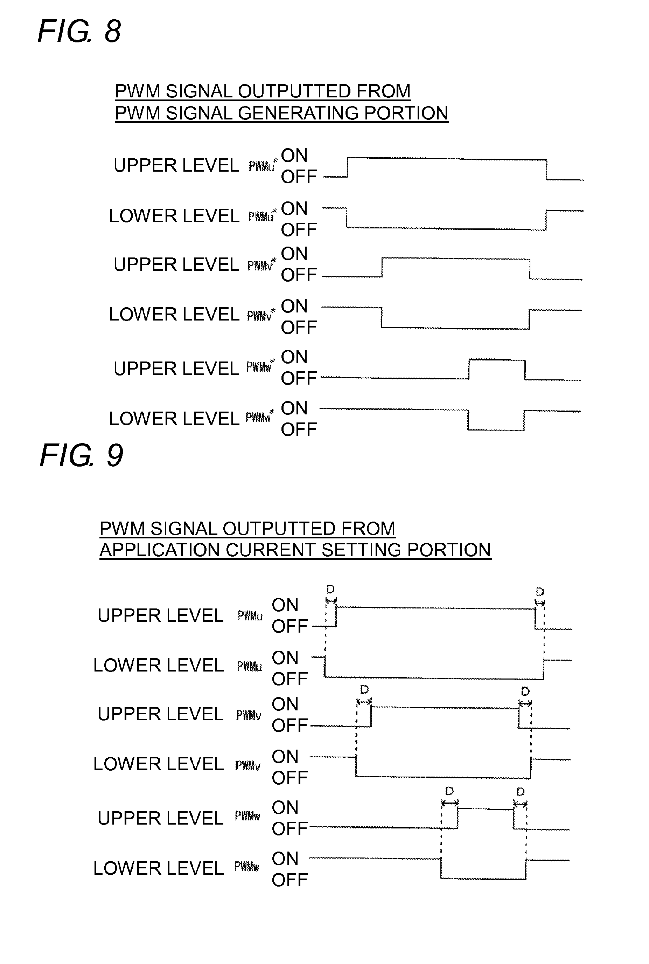

The time chart of the PWM signal, before the dead time is added, generated by the PWM signal generation unit 521 is shown in Fig. 8, and the time chart of the PWM signal after the dead time D is added by the application current setting unit 522 is shown in Fig. 9.

As is apparent from Fig. 9, the dead time D is a time added to shift the timing to switch ON/OFF of the switching element of the upper arm and the switching element of the lower arm of each phase. Thus, when the switching element 511 b is in the ON state and the switching element 512b is in the OFF state, and the switching element 511 b is to be switched to the OFF state and the switching element 512b is to be switched to the ON state, the timing at which both switching elements 511 b, 512b are in the ON state does not exist. Therefore, breakage of the inverter 510 due to short circuit of the upper and lower arms 511 a, 512a through the switching elements 511 b and 512b can be prevented.

However, in the conventional motor drive device 500 as shown in Fig. 6, distortion occurs in a motor current by adding the dead time to the PWM signal, and hence torque ripple and abnormal noise may be generated.

Therefore, a motor drive device including a dead time compensation calculation for calculating the dead time compensation amount based on a current command value is proposed to suppress the generation of the torque ripple and the abnormal noise (see for example, Japanese Unexamined Patent Publication Nos. 9-261974, 2006-199140, and 2008-254633).

Japanese Unexamined Patent Publication No. 9-261974 discloses a motor drive device for correcting a voltage command value to a voltage value at which a duty ratio becomes 100% when a current command value is close to zero. In such a motor drive device, the correction voltage command value is not changed when a polarity of the current command value changes, so that compensation in the opposite direction is not performed near the changing point even if the timing at which the current polarity changes is shifted for the current command and the actual output current.

Japanese Unexamined Patent Publication No. 2006-199140 discloses a motor drive device for performing the dead time compensation based on the current command value and a steering state.

Japanese Unexamined Patent Publication No. 2008-254633 discloses a motor drive device for generating a dead time compensation waveform signal having a step-like waveform. In such a motor drive device, an influence due to the shift in timing can be suppressed since a dead time compensation waveform signal has a step-like waveform even if the timing to perform the dead time compensation is shifted.

SUMMARY

The present invention has been devised to solve the problems described above, and an object thereof is to provide a motor drive device capable of suppressing generation of torque ripple and abnormal noise even if a motor rotates at high speed.

In accordance with one aspect of the present invention, a motor drive device comprises a drive circuit, comprising a plurality of switching elements, for driving a motor, and a control section for controlling the drive circuit. The control section comprises a current command value calculation unit for calculating a current command value, a rotation calculation unit for calculating a rotation angle and an angular speed of the motor, a drive signal generation unit for generating a drive signal based on the current command value, a correction signal generation unit for generating a correction signal for correcting the drive signal to compensate for a dead time of the drive circuit, and a dead time adding unit for adding the dead time to the drive signal corrected by the correction signal and outputting the resulting signal to the drive circuit. The correction signal generation unit generates the correction signal based on the current command value, and the rotation angle and the angular speed calculated by the rotation calculation unit.

With such a configuration, the correction signal generation unit generates the correction signal based on the current command value and the rotation angle and the angular speed calculated by the rotation calculation unit, so that the delay caused by feedback can be corrected even if the motor rotates at high speed, and the dead time compensation can be carried out in accordance with the timing at which the polarity of the motor current is switched. As a result, the generation of torque ripple and abnormal noise can be suppressed even if the motor rotates at high speed.

According to preferred embodiments of the motor drive device, the current command value may comprise a d-axis current command value and a q-axis current command value, and the correction signal generation unit may generate the correction signal based on the d-axis current command value, the q-axis current command value, and the rotation angle and the angular speed calculated by the rotation calculation unit.

In the embodiment of the motor drive device in which the current command value comprises the d-axis current command value and the q-axis current command value, the correction signal generation unit may comprise a correction value calculating portion for calculating a correction value for correcting the rotation angle calculated by the rotation calculation unit based on the angular speed calculated by the rotation calculation unit, a first adder for adding the rotation angle calculated by the rotation calculation unit and the correction value calculated by the correction value calculating portion, and a converting portion for converting the d-axis current command value and the q-axis current command value to a correction signal of three phases using an addition result of the first adder.

In the embodiment of the motor drive device in which the current command value comprises the d-axis current command value and the q-axis current command value, a current detection portion for detecting current supplied from the drive circuit to the motor may be further arranged, wherein the control section further comprises a current actual measurement value calculation unit for calculating a d-axis current actual measurement value and a q-axis current actual measurement value based on the detection result of the current detection portion and the rotation angle calculated by the rotation calculation unit, and the drive signal generation unit generates the drive signal based on the d-axis current command value, the d-axis current actual measurement value, the q-axis current command value, the q-axis current actual measurement value, and the rotation angle calculated by the rotation calculation unit.

According to embodiments of the invention, the control section may further comprise a second adder for adding the drive signal generated by the drive signal generation unit and the correction signal generated by the correction signal generation unit, wherein the dead time adding unit adds the dead time to the corrected drive signal outputted from the second adder, and outputs the resulting signal to the drive circuit.

According to embodiments of the present invention, there is provided a motor drive device capable of suppressing the generation of torque ripple and abnormal noise even if the motor rotates at high speed.

BRIEF DESCRIPTION OF THE DRAWINGS

Fig. 1 is a block diagram showing a configuration of a motor drive device according to one embodiment of the present invention;
Fig. 2 is a circuit diagram showing an inverter of the motor drive device of Fig. 1;
Fig. 3 is a graph showing a relationship of a duty ratio and a motor current of a PWM signal in a motor drive device according to a comparative example;
Fig. 4 is a graph showing a relationship of a duty ratio and a motor current of a PWM signal in a motor drive device according to an example;
Fig. 5 is a block diagram showing a configuration of the motor drive device according to the comparative example;
Fig. 6 is a block diagram showing a configuration of a conventional motor drive device;
Fig. 7 is a circuit diagram showing an inverter of the motor drive device of Fig. 6;
Fig. 8 is a time chart of a PWM signal generated by a PWM signal generation unit of the motor drive device of Fig. 6; and
Fig. 9 is a time chart of a PWM signal added with a dead time by an application current setting unit of the motor drive device of Fig. 6.

DETAILED DESCRIPTION

Hereinafter, embodiments of the present invention will be described with reference to the drawings.

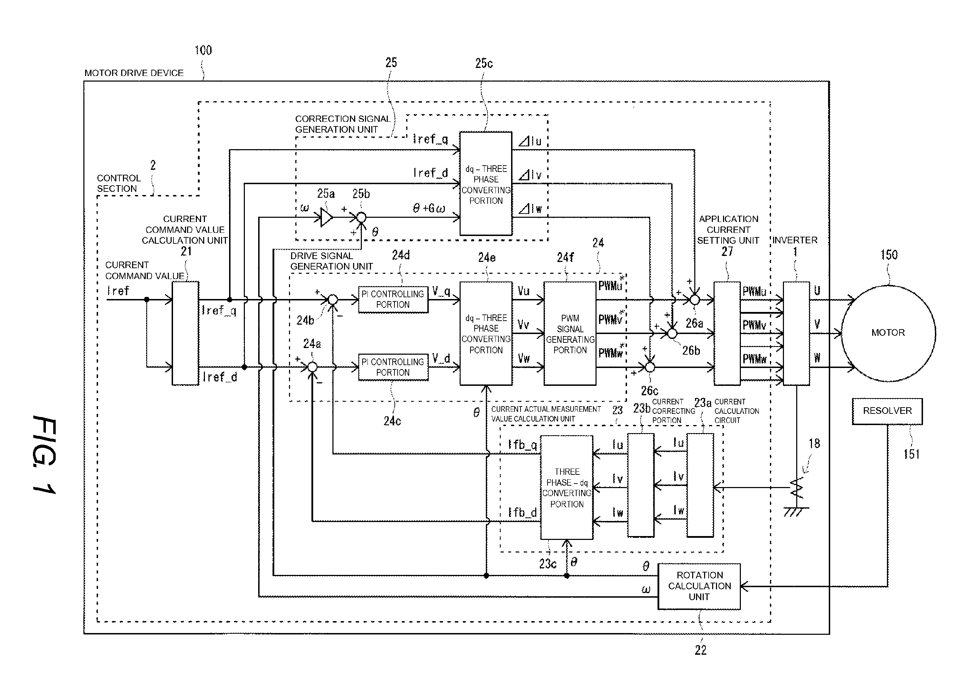

First, a configuration of a motor drive device 100 according to one embodiment of the present invention will be described with reference to Fig. 1.

As shown in Fig. 1, the motor drive device 100 according to the present embodiment includes an inverter 1 for driving a motor 150, and a control section 2 for controlling the inverter 1. The motor 150 is, for example, a three-phase brushless motor used in an electrical power steering device of a vehicle. The inverter 1 serves as a "drive circuit" of the present invention.

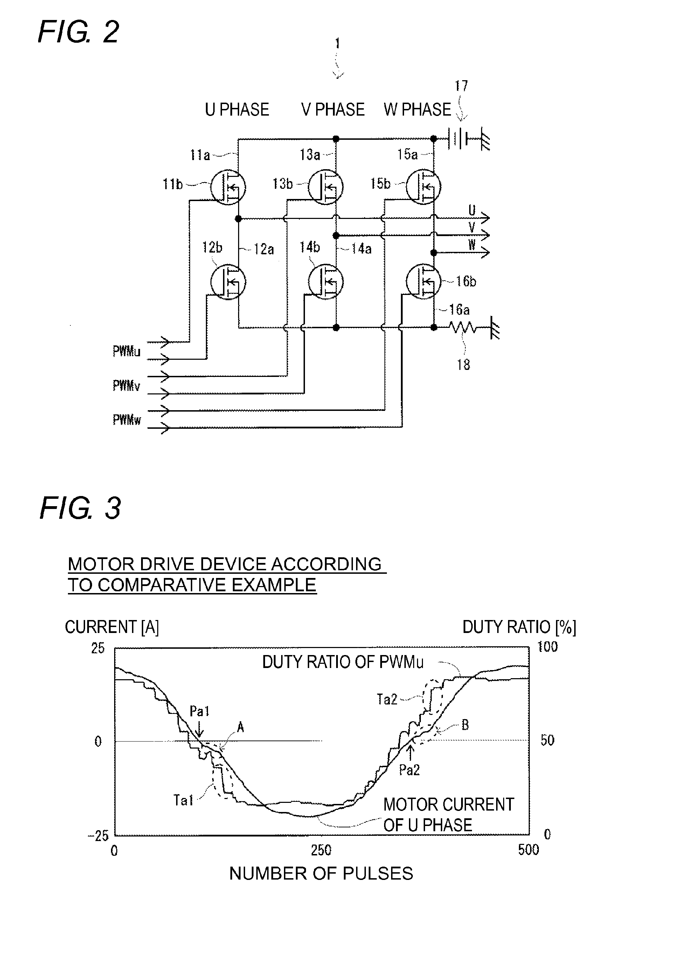

In the embodiment as shown in Fig. 2, the inverter 1 is configured by a three-phase bridge in which three sets of a pair of upper and lower arms are arranged in correspondence with a U phase, a V phase, and a W phase. An upper arm 11 a of the U phase includes a switching element 11 b, and a lower arm 12a of the U phase includes a switching element 12b. An upper arm 13a of the V phase includes a switching element 13b, and a lower arm 14a of the V phase includes a switching element 14b. An upper arm 15a of the W phase includes a switching element 15b, and a lower arm 16a of the W phase includes a switching element 16b.

A power supply 17 for supplying voltage to the motor 150 is connected to the upper arms 11 a, 13a, and 15a, and a resistor 18 for detecting the current flowing to the motor 150 is connected to the lower arms 12a, 14a, and 16a. The resistor 18 serves as a "current detection portion" of the present invention. The switching elements 11 b to 16b may be FET (Field Effect Transistors) or the like, and have the ON/OFF state controlled based on a PWM signal (PWMu, PWMv, PWMw) inputted from the control section 2.

The inverter 1 generates a three-phase drive voltage based on the PWM signal inputted from the control section 2. The inverter 1 outputs the three-phase drive voltage to the motor 150 to drive the motor 150.

The control section 2 may be configured by a CPU, a ROM, a RAM, or the like. As shown in Fig. 1, the control section 2 includes a current command value calculation unit 21, a rotation calculation unit 22, a current actual measurement value calculation unit 23, a drive signal generation unit 24, a correction signal generation unit 25, adders 26a to 26c, and an application current setting unit 27.

The current command value calculation unit 21 receives a current command value Iref, and the current command value calculation unit 21 calculates a d-axis current command value Iref_d and a q-axis current command value Iref_q based on the current command value Iref. The current command value calculation unit 21 outputs the d-axis current command value Iref_d and the q-axis current command value Iref_q to the drive signal generation unit 24 and the correction signal generation unit 25. The current command value calculation unit 21 serves as a "current command value calculation unit" of the present invention.

The rotation calculation unit 22 calculates a rotation angle θ and an angular speed ω of the motor 150 based on a detection signal of a resolver 151 for detecting the rotation angle of the motor 150. The rotation calculation unit 22 then outputs the rotation angle θ to the current actual measurement value calculation unit 23, the drive signal generation unit 24, and the correction signal generation unit 25, and outputs the angular speed ω to the correction signal generation unit 25. The angular speed ω is calculated based on the amount of change per unit time of the rotation angle θ. The rotation calculation unit 22 serves as a "rotation calculation unit" of the present invention.

The current actual measurement value calculation unit 23 includes a current calculation circuit 23a, a current correcting portion 23b, and a three phase - dq converting portion 23c. The current actual measurement value calculation unit 23 serves as a "current actual measurement value calculation unit" of the present invention.

The current calculation circuit 23a calculates the current actual measurement values Iu, Iv, Iw of each phase flowing to the motor 150 based on the voltage generated at both ends of the resistor 18. The relationship of the following equation (1) is met among the current actual measurement values Iu, Iv, Iw of each phase.

$$Iu + Iv + Iw = 0 \cdots (1)$$

Thus, the current actual measurement values of two phases of the three phases are actually calculated, and the current actual measurement value of the remaining one phase is calculated from such current actual measurement values. For example, the current actual measurement value Iv of the V phase can be obtained from the following equation (2) by calculating the current actual measurement value Iu of the U phase and the current actual measurement value Iw of the W phase.

$$Iv = - (Iu + Iw) \cdots (2)$$

The current correcting portion 23b performs a predetermined correction process on the current actual measurement values Iu, Iv, Iw calculated by the current calculation circuit 23a. The three phase - dq converting portion 23c converts the current actual measurement values Iu, Iv, Iw corrected by the current correcting portion 23b to the d-axis current actual measurement value Ifb_d and the q-axis current actual measurement value Ifb_q using the rotation angle θ of the motor 150 calculated by the rotation calculation unit 22. The three phase - dq converting portion 23c outputs the d-axis current actual measurement value Ifb_d and the q-axis current actual measurement value Ifb_q to the drive signal generation unit 24. The three phase - dq conversion is carried out according to the following equation (3).

$$\begin{pmatrix} Ifb\_d \\ Ifb\_q \end{pmatrix} = \sqrt{\frac{2}{3}} \begin{pmatrix} \cos\theta & \cos\left(\theta - \frac{2}{3}\pi\right) & \cos\left(\theta + \frac{2}{3}\pi\right) \\ -\sin\theta & -\sin\left(\theta - \frac{2}{3}\pi\right) & -\sin\left(\theta + \frac{2}{3}\pi\right) \end{pmatrix} \begin{pmatrix} Iu \\ Iv \\ Iw \end{pmatrix} \cdots (3)$$

The drive signal generation unit 24 includes subtractors 24a and 24b, PI (Proportional Integral) controlling portions 24c and 24d, a dq-three phase converting portion 24e, and a PWM signal generating portion 24f. The drive signal generation unit 24 serves as a "drive signal generation unit" of the present invention.

The subtractor 24a receives the d-axis current command value Iref_d from the current command value calculation unit 21 and the d-axis current actual measurement value Ifb_d from the current actual measurement value calculation unit 23. The subtractor 24a calculates the deviation between the d-axis current command value Iref_d and the d-axis current actual measurement value Ifb_d, and outputs the calculated deviation to the PI controlling portion 24c.

The subtractor 24b receives the q-axis current command value Iref_q from the current command value calculation unit 21 and the q-axis current actual measurement value Ifb_q from the current actual measurement value calculation unit 23. The subtractor 24b calculates the deviation between the q-axis current command value Iref_q and the q-axis current actual measurement value Ifb_q, and outputs the calculated deviation to the PI controlling portion 24d.

The PI controlling portion 24c calculates the d-axis voltage command value V_d corresponding to the deviation inputted from the subtractor 24a, and outputs the d-axis voltage command value V_d to the dq - three phase converting portion 24e.

The PI controlling portion 24d calculates the q-axis voltage command value V_q corresponding to the deviation inputted from the subtractor 24b, and outputs the q-axis voltage command value V_q to the dq - three phase converting portion 24e.

The dq - three phase converting portion 24e converts the d-axis voltage command value V_d inputted from the PI controlling portion 24c and the q-axis voltage command value V_q inputted from the PI controlling portion 24d to the application voltage values Vu, Vv, Vw of three phases using the rotation angle θ of the motor 150 calculated by the rotation calculation unit 22. The dq - three phase converting portion 24e then outputs the application voltage values Vu, Vv, Vw of three phases to the PWM signal generating portion 24f. The dq - three phase conversion is carried out according to the following equation (4).

$$\begin{pmatrix} Vu \\ Vv \\ Vw \end{pmatrix} = \sqrt{\frac{2}{3}} \begin{pmatrix} 1 & 0 \\ -\frac{1}{2} & \frac{\sqrt{3}}{2} \\ -\frac{1}{2} & -\frac{\sqrt{3}}{2} \end{pmatrix} \begin{pmatrix} \cos\theta & -\sin\theta \\ \sin\theta & \cos\theta \end{pmatrix} \begin{pmatrix} V\_d \\ V\_q \end{pmatrix} \cdots (4)$$

The PWM signal generating portion 24f generates the PWM signal (PWMu*, PWMv*, PWMw*) having a predetermined duty for controlling the ON/OFF state of the switching elements 11 b to 16b (Fig. 2) of the inverter 1 based on the application voltage values Vu, Vv, Vw of three phases. The PWM signal generating portion 24f then outputs the PWM signal PWMu* to the adder 26a, the PWM signal PWMv* to the adder 26b, and the PWM signal PWMw* to the adder 26c.

The correction signal generation unit 25 generates a correction signal for correcting the PWM signal to compensate for the dead time of the inverter 1. The correction signal generation unit 25 includes a correction value calculating portion 25a, an adder 25b, and a dq - three phase converting portion 25c. The correction signal generation unit 25 serves as a "correction signal generation unit" of the present invention. The adder 25b serves as a "first adder" of the present invention, and the dq - three phase converting portion 25c serves as a "converting portion" of the present invention.

The correction value calculating portion 25a receives the angular speed ω of the motor 150 from the rotation calculation unit 22. The correction value calculating portion 25a multiples an advance angle gain G to the angular speed ω calculated by the rotation calculation unit 22 to calculate a correction value Gω for correcting the rotation angle θ calculated by the rotation calculation unit 22. The advance angle gain G is a parameter for advancing (making faster) the timing of correcting the PWM signal, and the correction value Gω is an advance angle amount corresponding to the angular speed ω of the motor 150. The correction value calculating portion 25a outputs the calculated correction value Gω to the adder 25b.

The adder 25b receives the rotation angle θ of the motor 150 from the rotation calculation unit 22, and the correction value Gω from the correction value calculating portion 25a. The adder 25b adds the rotation angle θ calculated by the rotation calculation unit 22, and the correction value Gω calculated by the correction value calculating portion 25a. The adder 25b outputs the addition result θ + Gω to the dq - three phase converting portion 25c.

The dq - three phase converting portion 25c receives the d-axis current command value Iref_d and the q-axis current command value Iref_q from the current command value calculation unit 21 and the addition result θ + Gω from the adder 25b. The dq - three phase converting portion 25c converts the d-axis current command value Iref_d and the q-axis current command value Iref_q calculated by the current command value calculation unit 21 to the correction signals ΔIu, ΔIv, ΔIw of three phases using the addition result θ + Gω of the adder 25b. The dq - three phase converting portion 25c outputs the correction signal ΔIu to the adder 26a, the correction signal ΔIv to the adder 26b, and the correction signal ΔIw to the adder 26c. The dq - three phase conversion is carried out according to the following equation (5).

$$\begin{pmatrix} \varDelta Iu \\ \varDelta Iv \\ \varDelta Iw \end{pmatrix} = \sqrt{\frac{2}{3}} \begin{pmatrix} \cos(\theta + G\omega) & -\sin(\theta + G\omega) \\ \cos\left((\theta + G\omega) - \frac{2}{3}\pi\right) & -\sin\left((\theta + G\omega) - \frac{2}{3}\pi\right) \\ \cos\left((\theta + G\omega) + \frac{2}{3}\pi\right) & -\sin\left((\theta + G\omega) + \frac{2}{3}\pi\right) \end{pmatrix} \begin{pmatrix} Iref\_d \\ Iref\_q \end{pmatrix} \cdots (5)$$

The adders 26a to 26c add the correction signal generated by the correction signal generation unit 25 to the PWM signal generated by the drive signal generation unit 24. The adders 26a to 26c serve as a "second adder" of the present invention. Specifically, the adder 26a adds the PWM signal PWMu* inputted from the drive signal generation unit 24 and the correction signal ΔIu inputted from the correction signal generation unit 25, and outputs the addition result PWMu* + ΔIu to the application current setting unit 27.

The adder 26b adds the PWM signal PWMv* inputted from the drive signal generation unit 24 and the correction signal ΔIv inputted from the correction signal generation unit 25, and outputs the addition result PWMv* + ΔIv to the application current setting unit 27.

The adder 26c adds the PWM signal PWMw* inputted from the drive signal generation unit 24 and the correction signal ΔIw inputted from the correction signal generation unit 25, and outputs the addition result PWMw* + ΔIw to the application current setting unit 27.

The application current setting unit 27 sets the current to apply on the inverter 1 based on the addition results of the adders 26a to 26c. Specifically, the application current setting unit 27 adds the dead time with respect to the PWM signal in which the correction signal is added, and outputs the dead time added PWM signal (PWMu, PWMv, PWMw) to the inverter 1. The application current setting unit 27 serves as an example of a "dead time adding unit" of the present invention.

The PWM signal PWMu is a signal for driving the switching elements 11 b and 12b of the U phase, the PWM signal PWMv is a signal for driving the switching elements 13b and 14b for the V phase, and the PWM signal PWMw is a signal for driving the switching elements 15b and 16b for the W phase.

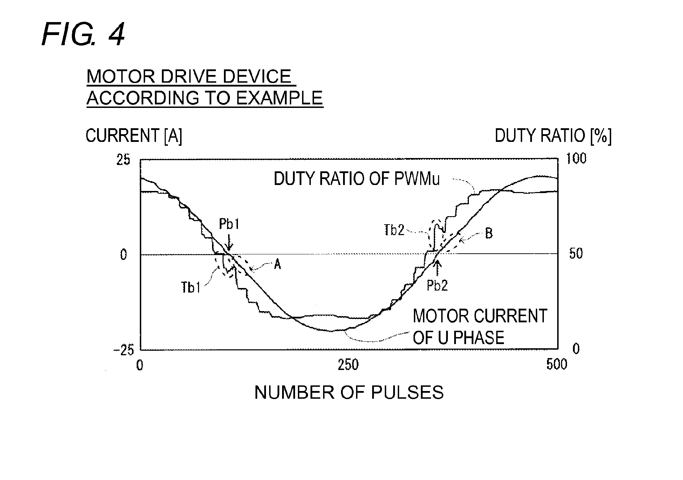

Next, the simulation carried out to check the effects of the present embodiment will be described. In this simulation, the duty ratio of the PWM signal PWMu and the motor current of the U phase of the motor drive device according to a comparative example were measured. Furthermore, the duty ratio of the PWM signal PWMu and the

motor current of the U phase of the motor drive device according to an example corresponding to the present embodiment were measured. In this simulation, the rotation number of the motor was 1600 rpm. The measurement results are shown in Fig. 3 and Fig. 4.

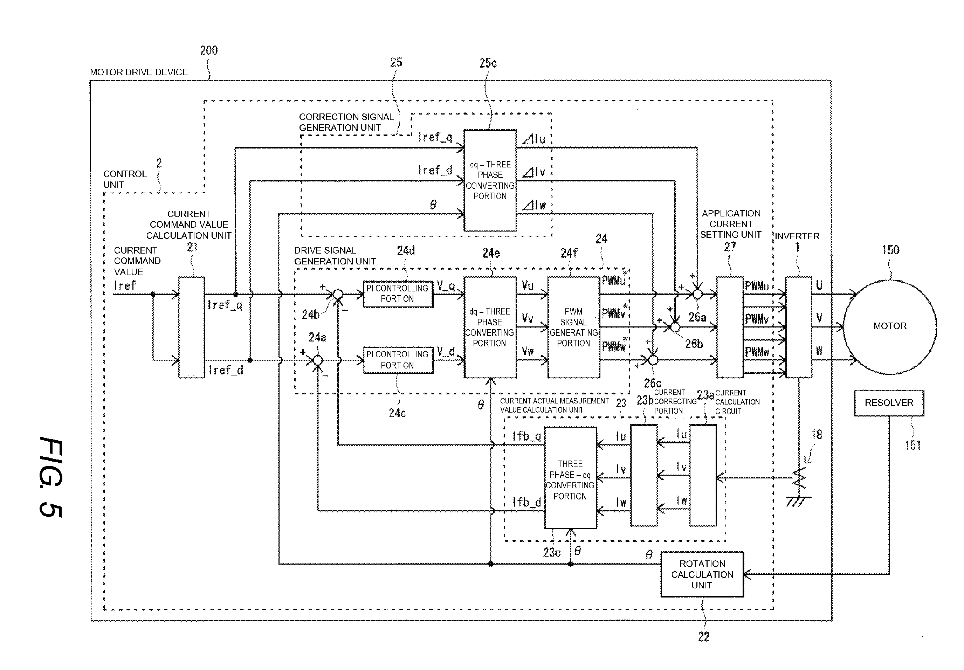

**[0051]** As shown in Fig. 5, the motor drive device 200 according to the comparative example does not include the correction value calculating portion 25a and the adder 25b in the correction signal generation unit 25, where the dq - three phase conversion is carried out using the d-axis current command value Iref_d and the q-axis current command value Iref_q from the current command value calculation unit 21, and the rotation angle θ from the rotation calculation unit 22. Thus, the dq - three phase conversion when generating the correction signal is carried out according to the following equation (6) in the motor drive device 200 according to the comparative example.

$$\begin{pmatrix} \Delta Iu \\ \Delta Iv \\ \Delta Iw \end{pmatrix} = \sqrt{\frac{2}{3}} \begin{pmatrix} \cos\theta & -\sin\theta \\ \cos\left(\theta - \frac{2}{3}\pi\right) & -\sin\left(\theta - \frac{2}{3}\pi\right) \\ \cos\left(\theta + \frac{2}{3}\pi\right) & -\sin\left(\theta + \frac{2}{3}\pi\right) \end{pmatrix} \begin{pmatrix} Iref_d \\ Iref_q \end{pmatrix} \cdots \quad (6)$$

**[0052]** As shown in Fig. 3, the timing Ta1 at which the correction of the PWM signal PWMu is carried out is delayed with respect to a point Pa1 where the motor current of the U phase zero crosses in the motor drive device 200 according to the comparative example. The timing Ta2 at which the correction of the PWM signal PWMu is carried out is delayed with respect to a point Pa2 where the motor current of the U phase zero crosses. In other words, the timing (Pa1, Pa2) at which the polarity of the motor current is switched and the timing (Ta1, Ta2) at which the correction is carried out are shifted.

**[0053]** This is caused by the temporal delay in feedback from the current actual measurement value calculation unit 23. Therefore, the dead time compensation cannot be carried out in accordance with the timing at which the polarity of the motor current is switched in the motor drive device according to the comparative example, and hence it is found that distortion occurs in the motor current of the U phase at the portions of A and B in Fig. 3.

**[0054]** The temporal delay of the feedback increases according to the rotation number of the motor. Therefore, if the motor rotates at high speed, in particular, the temporal delay of the feedback becomes large and the shift between the polarity switching timing and the correction timing also becomes large. Therefore, the distortion generated in the motor current becomes large, thereby generating torque ripple and abnormal noise.

**[0055]** As shown in Fig. 4, the timing Tb1 at which the correction of the PWM signal PWMu is carried out is not delayed with respect to a point Pb1 where the motor current of the U phase zero crosses in the motor drive device 100 according to the example. The timing Tb2 at which the correction of the PWM signal PWMu is carried out is not delayed with respect to a point Pb2 where the motor current of the U phase zero crosses. In other words, the timing (Pb1, Pb2) at which the polarity of the motor current is switched substantially coincides with the timing (Tb1, Tb2) at which the correction is carried out.

**[0056]** This is because the timing of correction is advanced to correct the influence of feedback delay by the correction signal generated by the correction signal generation unit 25 using the rotation angle θ and the angular speed ω calculated by the rotation calculation unit 22 and the advance angle gain G. Therefore, the dead time compensation can be carried out in accordance with the timing at which the polarity of the motor current is switched in the motor drive device 100 according to the example, and hence the distortion of the motor current of the U phase at the portions of A and B in Fig. 4 becomes small compared to the motor drive device 200 according to the comparative example.

**[0057]** The motor current when the rotation number of the motor is 100 rpm, 200 rpm, 400 rpm, 800 rpm, and 1200 rpm was measured in the motor drive device 200 according to the comparative example and the motor drive device 100 according to the example.

**[0058]** When the rotation number of the motor is 100 rpm, 200 rpm, and 400 rpm, the distortion of the motor current was small in both the motor drive device 200 according to the comparative example and the motor drive device 100 according to the example.

**[0059]** However, the distortion occurred in the motor current when the rotation number of the motor is 800 rpm and 1200 rpm in the motor drive device 200 according to the comparative example. The distortion of the motor current becomes greater according to the rotation number of the motor. This is assumed to be because the follow-up of the feedback becomes more difficult as the rotation speed becomes higher. In the motor drive device 100 according to the

example, on the other hand, the distortion of the motor current was small when the rotation number of the motor is 800 rpm and 1200 rpm. This is assumed to be because the delay in follow-up of the feedback can be improved at the time of high speed rotation of the motor by reflecting the rotation angle θ and the angular speed ω on the correction of the PWM signal.

In the present embodiment, as described above, the correction signal generation unit 25 for generating the correction signal (ΔIu, ΔIv, ΔIw) for correcting the PWM signal based on the d-axis current command value Iref_d and the q-axis current command value Iref_q, and the rotation angle θ and the angular speed ω calculated by the rotation calculation unit 22 is arranged to compensate for the dead time of the inverter 1. The correction signal generation unit 25 includes the correction value calculating portion 25a for calculating the correction value Gω for correcting the rotation angle θ calculated by the rotation calculation unit 22 based on the angular speed ω calculated by the rotation calculation unit 22 and the advance angle gain G, and the adder 25b for adding the rotation angle θ and the correction value Gω. Thus, the dead time compensation can be carried out in accordance with the timing at which the polarity of the motor current switched since the delay by the feedback can be corrected even if the motor 150 rotates at high speed. As a result, the generation of torque ripple and abnormal noise can be suppressed even if the moor 150 rotates at high speed.

The present invention may adopt various embodiments other than the above. For example, the example in which the motor 150 is the three phase motor is described in the above embodiment, but the present invention is not limited thereto, and the motor 150 may be a multi-phase motor of four or more phases.

Moreover, the example in which the motor 150 is a brushless motor is described in the above embodiment, but the present invention is not limited thereto, and the motor 150 may be a motor with brush.

Moreover, the example in which the switching elements 11 b to 16b are FETs is described in the above embodiment, but the present invention is not limited thereto, and the switching elements 11 b to 16b may be an IGBT (Insulated Gate Bipolar Transistor).

Moreover, the example in which the resolver 151 for detecting the rotation angle of the motor 150 is arranged is described in the above embodiment, but the present invention is not limited thereto, and other angular sensors such as an encoder for detecting the rotation angle of the motor 150 may be arranged.

**Claims**

1. A motor drive device (100) comprising:

    a drive circuit (1), comprising a plurality of switching elements (11 b, 12b, 13b, 14b, 15b, 16b), for driving a motor (150); and
    a control section (2) for controlling the drive circuit (1),

    wherein the control section (2) comprises:

    a current command value calculation unit (21) for calculating a current command value,
    a rotation calculation unit (22) for calculating a rotation angle and an angular speed of the motor (150),
    a drive signal generation unit (24) for generating a drive signal based on the current command value,
    a correction signal generation unit (25) for generating a correction signal for correcting the drive signal to compensate for a dead time of the drive circuit (1), and
    a dead time adding unit (27) for adding the dead time to the drive signal corrected by the correction signal and outputting the resulting signal to the drive circuit (1); and

    wherein the correction signal generation unit (25) is adapted to generate the correction signal based on the current command value, and the rotation angle and the angular speed calculated by the rotation calculation unit (22).

2. The motor drive device (100) according to claim 1, **characterized in that**
the current command value comprises a d-axis current command value and a q-axis current command value, and the correction signal generation unit (25) is adapted to generate the correction signal based on the d-axis current command value, the q-axis current command value, and the rotation angle and the angular speed calculated by the rotation calculation unit (22).

3. The motor drive device (100) according to claim 2, **characterized in that** the correction signal generation unit (25) comprises:

    a correction value calculating portion (25a) for calculating a correction value for correcting the rotation angle calculated by the rotation calculation unit (22) based on the angular speed calculated by the rotation calculation unit (22),

a first adder (25b) for adding the rotation angle calculated by the rotation calculation unit (22) and the correction value corrected by the correction value calculating portion (25a), and

a converting portion (25c) for converting the d-axis current command value and the q-axis current command value to a correction signal of three phases using an addition result of the first adder (25b).

4. The motor drive device (100) according to claim 2 or 3, further comprising
a current detection portion (18) for detecting a current supplied from the drive circuit (1) to the motor (150), wherein the control section (2) further comprises a current actual measurement value calculation unit (23) for calculating a d-axis current actual measurement value and a q-axis current actual measurement value based on the detection result of the current detection portion (18) and the rotation angle calculated by the rotation calculation unit (22), and the drive signal generation unit (24) is adapted to generate the drive signal based on the d-axis current command value, the d-axis current actual measurement value, the q-axis current command value, the q-axis current actual measurement value, and the rotation angle calculated by the rotation calculation unit (22).

5. The motor drive device (100) according to any one of claims 1 to 4, **characterized in that**
the control section (2) further comprises a second adder (26a) for adding the drive signal generated by the drive signal generation unit (24) and the correction signal generated by the correction signal generation unit (25), and the dead time adding unit (27) is adapted to add the dead time to the corrected drive signal outputted from the second adder (26a), and to output the resulting signal to the drive circuit (1).

FIG. 1

100

MOTOR DRIVE DEVICE

25

25c

CORRECTION SIGNAL GENERATION UNIT

Iref_q

Iref_d

dq – THREE PHASE CONVERTING PORTION

△Iu

△Iv

△Iw

CONTROL SECTION

2

25a  25b

ω  θ +Gω

θ

CURRENT COMMAND VALUE CALCULATION UNIT

21

CURRENT COMMAND VALUE

Iref

Iref_q

Iref_d

DRIVE SIGNAL GENERATION UNIT

24d

24e

24f

24

24b

PI CONTROLLING PORTION

V_q

dq – THREE PHASE CONVERTING PORTION

Vu

Vv

Vw

PWM SIGNAL GENERATING PORTION

PWMu*

PWMv*

PWMw*

24a

PI CONTROLLING PORTION

V_d

APPLICATION CURRENT SETTING UNIT

27

INVERTER

1

150

MOTOR

26a

26b

26c

PWMu

PWMv

PWMw

U

V

W

24c

θ

CURRENT ACTUAL MEASUREMENT VALUE CALCULATION UNIT

23

23b CURRENT CORRECTING PORTION

23a CURRENT CALCULATION CIRCUIT

Ifb_q

THREE PHASE – dq CONVERTING PORTION

Iu

Iv

Iw

Iu

Iv

Iw

18

RESOLVER

151

Ifb_d

23c

θ

θ

ROTATION CALCULATION UNIT

ω

22

10

## FIG. 2

U PHASE    V PHASE    W PHASE

## FIG. 3

MOTOR DRIVE DEVICE ACCORDING
TO COMPARATIVE EXAMPLE

# FIG. 4

## MOTOR DRIVE DEVICE ACCORDING TO EXAMPLE

CURRENT [A]                              DUTY RATIO [%]

DUTY RATIO OF PWMu

MOTOR CURRENT OF U PHASE

NUMBER OF PULSES

FIG. 5

FIG. 6

# FIG. 7

510

517

U PHASE    V PHASE    W PHASE

511a        513a        515a

511b        513b        515b

U
V
W

512b   512a   514b   514a          516b

516a

PWMu

PWMv

PWMw

# FIG. 8

### PWM SIGNAL OUTPUTTED FROM
### PWM SIGNAL GENERATING PORTION

UPPER LEVEL $PWMu^*$ ON / OFF

LOWER LEVEL $PWMu^*$ ON / OFF

UPPER LEVEL $PWMv^*$ ON / OFF

LOWER LEVEL $PWMv^*$ ON / OFF

UPPER LEVEL $PWMw^*$ ON / OFF

LOWER LEVEL $PWMw^*$ ON / OFF

# FIG. 9

### PWM SIGNAL OUTPUTTED FROM
### APPLICATION CURRENT SETTING PORTION

UPPER LEVEL $PWMu$ ON / OFF

LOWER LEVEL $PWMu$ ON / OFF

UPPER LEVEL $PWMv$ ON / OFF

LOWER LEVEL $PWMv$ ON / OFF

UPPER LEVEL $PWMw$ ON / OFF

LOWER LEVEL $PWMw$ ON / OFF

Europäisches
Patentamt

European
Patent Office

Office européen
des brevets

## EUROPEAN SEARCH REPORT

Application Number

EP 11 15 8351

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2004 248480 A (NISSAN MOTOR) 2 September 2004 (2004-09-02) * abstract; figures 1,16 * * pages 7,9,10,1 * ----- | 1-5 | INV. H02P21/05 H02P27/08 |
| X | WO 03/041260 A1 (INT RECTIFIER CORP [US]) 15 May 2003 (2003-05-15) * page 1, line 16 - page 2, line 8; figures 1,2 * * page 5, lines 4-19 * ----- | 1-5 | |
| | | | TECHNICAL FIELDS SEARCHED (IPC) |
| | | | H02P |

The present search report has been drawn up for all claims

| Place of search | Date of completion of the search | Examiner |
|---|---|---|
| The Hague | 24 May 2011 | Gusia, Sorin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 11 15 8351

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2011

| Patent document cited in search report | | Publication date | Patent family member(s) | | Publication date |
|---|---|---|---|---|---|
| JP 2004248480 | A | 02-09-2004 | NONE | | |
| WO 03041260 | A1 | 15-05-2003 | EP | 1444773 A1 | 11-08-2004 |
| | | | JP | 2005509397 T | 07-04-2005 |
| | | | TW | I275242 B | 01-03-2007 |
| | | | US | 2003090232 A1 | 15-05-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9261974 A
- JP 2006199140 A
- JP 2008254633 A